# EUROPEAN PATENT APPLICATION

(11) **EP 3 783 710 A1**
(43) Date of publication of application: **24.02.2021**
(21) Application number: 19787978.6
(22) Date of filing: 16.04.2019
(51) Int. Cl.: H01M 8/1213, C04B 35/50, G01N 27/409, H01B 1/06, H01M 4/86, H01M 8/12, H01M 8/124, H01M 8/1246

(54) **SOLID ELECTROLYTE ASSEMBLY**

(30) Priority: 17.04.2018 JP 2018079457; 30.10.2018 WO PCT/JP2018/040385
(71) Applicant: Mitsui Mining & Smelting Co., Ltd., Shinagawa-ku, Tokyo 141-8584 (JP)
(72) Inventor: IDE, Shingo, Ageo-shi, Saitama 362-0021 (JP); SHIMANOE, Kengo, Fukuoka-shi, Fukuoka 819-0395 (JP); WATANABE, Ken, Fukuoka-shi, Fukuoka 819-0395 (JP); SUEMATSU, Koichi, Fukuoka-shi, Fukuoka 819-0395 (JP)
(74) Representative: Novagraaf Technologies
(86) International application number: PCT/JP2019/016270
(87) International publication number: WO 2019/203215

(57) **Abstract**

A solid electrolyte assembly (10) is obtained by joining a solid electrolyte layer (11) having oxide ion conductivity and containing lanthanum and a first electrode layer (12) made of an oxide that is represented by ABO_{3-δ} and has a cubic perovskite structure to each other, where A represents an alkaline-earth metal element, B represents a transition metal element, and δ represents a fraction that occurs depending on the valences and amounts of A, B, and O. The oxide contains lanthanum at a part of the A site, and an atom ratio of lanthanum to all the elements occupying the A site is 0.01 or greater and 0.80 or less.

## Description

### Technical Field

The present invention relates to an assembly of a solid electrolyte having oxide ion conductivity. The solid electrolyte assembly of the present invention is applicable to various fields in which its oxide ion conductivity is used.

### Background Art

Various solid electrolytes having oxide ion conductivity are known. Such solid electrolytes are used as, for example, an oxygen permeable element, a fuel cell electrolyte, a gas sensor, and the like in various fields. For example, Patent Literature 1 discloses a ceramic electrochemical element in which an oxide electrode is provided on a solid electrolyte and which is capable of pumping oxygen. Ln₁₋ₓSrₓMnO_{3-δ} is used as the oxide electrode. Fully stabilized zirconia, partially stabilized zirconia, lanthanum gallate, or cerium oxide doped with a rare earth element or an alkaline earth metal element is used as the solid electrolyte.

Patent Literature 2 discloses a solid oxide fuel cell in which an electrode material containing a perovskite composite oxide is used as an air pole and/or a fuel pole. The perovskite composite oxide is represented by (A'₁₋ₓA"ₓ)(B'_{1-y}B"_{y})O_{3-δ}, where: A' represents an element selected from the group consisting of rare earth elements; A" represents an element selected from the group consisting of barium, strontium, and calcium; B' represents gallium; and B" represents an element selected from the group consisting of cobalt, manganese, iron, nickel, copper, and aluminum. A gallate composite oxide having a perovskite structure ABO_{3-δ} and containing gallium at B site is used as a solid electrolyte of the fuel cell.

Patent Literature 3 discloses an electrolyte-electrode assembly in which an apatite-type oxide is used as an electrolyte. A composite oxide of lanthanum and silicon, the composite oxide being represented by La_{X}Si₆O_{1.5X+12} and being a single crystal or oriented along the c-axis, is used as the electrolyte. An oxide ceramic represented by La_{X}Sr_{1-X}Co_{Y}Fe_{1-Y}O_{α}, Ba_{X}Sr_{1-X}Co_{Y}Fe_{1-Y}O_{α}, or Sm_{X}Sr_{1-X}CoO_{α} is used as an electrode.

### Citation List

### Patent Literature

Patent Literature 1: JP 2003-288904A
Patent Literature 2: JP 2005-183279A
Patent Literature 3: JP 2009-176675A

### Summary of Invention

Various devices in which solid electrolytes having oxide ion conductivity are used as disclosed in Patent Literatures 1 to 3 have been proposed, but there is demand to improve the oxide ion conductivity of a device as a whole even more.

Therefore, an object of the present invention is to improve the oxide ion conductivity of a device including a solid electrolyte even more.

To achieve the above-described object, the inventors of the present invention conducted in-depth research, and found that, when a specific solid electrolyte having oxide ion conductivity is used, and an electrode made of an oxide containing a specific material is directly joined to this solid electrolyte oxide, ion conductivity of a device as a whole is improved.

The present invention was made based on the above-described findings, and achieves the above-described object by providing a solid electrolyte assembly having a solid electrolyte and a first electrode, the solid electrolyte having oxide ion conductivity and containing lanthanum, the first electrode being made of an oxide that has a cubic perovskite structure and that is represented by ABO_{3-δ}, wherein A represents an alkaline-earth metal element, B represents a transition metal element, and δ represents a fraction that occurs depending on the valences and amounts of A, B, and O, the solid electrolyte and the first electrode being joined to each other, and the oxide containing lanthanum occupying a part of A site, and an atom ratio of lanthanum to all the elements occupying the A site being 0.01 or greater and 0.80 or less.

Also, the present invention achieves the above-described object by improving the oxide ion conductivity of a device as a whole by providing a solid electrolyte assembly having a solid electrolyte and a first electrode, the solid electrolyte having oxide ion conductivity and containing lanthanum, the first electrode being made of an oxide that has a cubic perovskite structure and that is represented by ABO_{3-δ}, wherein A represents an alkaline-earth metal element, B represents only iron, or iron and at least one transition metal element other than iron, and δ represents a fraction that occurs depending on the valences and amounts of A, B, and O, the solid electrolyte and the first electrode being joined to each other, and the oxide optionally containing lanthanum occupying a part of A site, and an atom ratio of iron to all the elements occupying B site being 0.1 or greater and 1.0 or less.

### Brief Description of Drawings

[Fig. 1] Fig. 1 schematically shows a cross section of an embodiment of a device in which a solid electrolyte assembly of the present invention is used, taken along a thickness direction.
[Fig. 2] Fig. 2 shows a scanning electron microscope image of LSCFN powder used in electrode layers of Example 1.
[Fig. 3] Fig. 3 shows a scanning electron microscope image of LSCF powder used in electrode layers of Comparative Example 3.

### Description of Embodiments

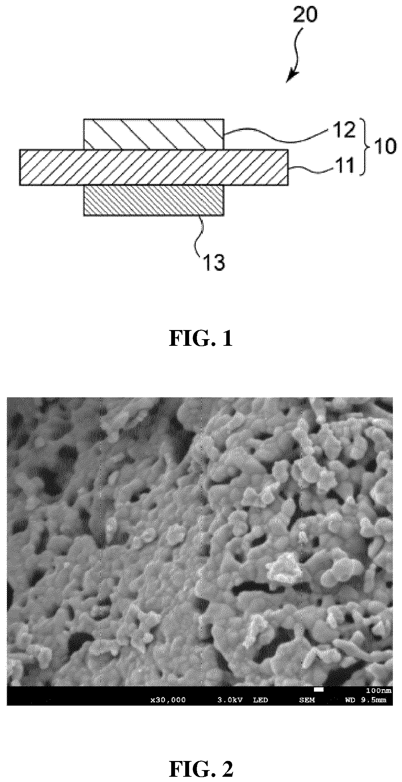

Hereinafter, the present invention will be described based on a preferred embodiment thereof, with reference to the drawings. As shown in Fig. 1, a solid electrolyte assembly 10 of the present invention includes a layer (hereinafter also referred to as the "solid electrolyte layer") 11 made of a solid electrolyte. The solid electrolyte layer 11 is made of a solid electrolyte that has oxide ion conductivity at or above a predetermined temperature. A first electrode layer 12 is joined to one surface of the solid electrolyte layer 11, the first electrode layer 12 being stacked in contact with the solid electrolyte layer 11. The solid electrolyte layer 11 and the first electrode layer 12 are in direct contact with each other, and no other layer is present therebetween. The first electrode layer 12 is made of a material having oxide ion conductivity and electron conductivity. The solid electrolyte assembly 10 is constituted by the solid electrolyte layer 11 and the first electrode layer 12.

As shown in Fig. 1, a second electrode layer 13 may be disposed on a surface on the opposite side to the surface on which the first electrode layer 12 is disposed, of the two surfaces of the solid electrolyte layer 11. In this case, a device 20 is formed in which the solid electrolyte layer 11, the first electrode layer 12, and the second electrode layer 13 are arranged in the above-described order. The solid electrolyte layer 11 and the second electrode layer 13 are in direct contact with each other, and no other layer is present therebetween.

Although the solid electrolyte layer 11 and the first electrode layer 12 shown in Fig. 1 have different sizes, the relationship in size between these two layers is not limited to this, and, for example, the solid electrolyte layer 11 and the first electrode layer 12 may have the same size. The same holds true for the solid electrolyte layer 11 and the second electrode layer 13, and these two layers may have the same size, or, for example, the solid electrolyte layer 11 may have a larger size than the second electrode layer 13.

As a result of the research conducted by the inventors of the present invention, it was found that, in a solid electrolyte assembly 10, when a first electrode layer 12 made of a specific oxide is joined to a solid electrolyte layer 11, the oxide ion conductivity of the solid electrolyte assembly 10 as a whole is improved. In particular, it was found that, in the case where a solid electrolyte layer 11 containing an oxide of lanthanum, which is one of materials having high oxide ion conductivity, is used as the solid electrolyte layer, oxide ion conductivity improves even more.

The solid electrolyte layer 11 is a conductor in which oxide ions serve as carriers. A single crystal material or a polycrystal material is used as the solid electrolyte constituting the solid electrolyte layer 11. In particular, it is preferable to use an oxide of lanthanum as the material constituting the solid electrolyte layer 11, because the oxide ion conductivity can be improved even more. Examples of the oxide of lanthanum include: a composite oxide containing lanthanum and gallium; a composite oxide obtained by adding, to the composite oxide containing lanthanum and gallium, strontium, magnesium, cobalt, or the like; a composite oxide containing lanthanum and molybdenum; and the like. In particular, it is preferable to use an oxide-ion-conductive material made of a composite oxide of lanthanum and silicon, because this material has high oxide ion conductivity.

An example of the composite oxide of lanthanum and silicon is an apatite-type composite oxide containing lanthanum and silicon. An apatite-type composite oxide that contains lanthanum, which is a trivalent element, silicon, which is a tetravalent element, and O and whose composition is represented by LaₓSi₆O_{1.5x+12}, where x represents a number that is 8 or greater and 10 or less, has high oxide ion conductivity and is therefore preferably used as the apatite-type composite oxide. In the case where this apatite-type composite oxide is used as the solid electrolyte layer 11, it is preferable that the c-axis of the apatite-type composite oxide matches the thickness direction of the solid electrolyte layer 11. The most preferable composition of this apatite-type composite oxide is La_{9.33}Si₆O₂₆. This composite oxide can be produced in accordance with the method disclosed in JP 2013-51101A, for example.

Another example of the material constituting the solid electrolyte layer 11 is a composite oxide represented by the general formula A_{9.33+x}[T_{6.00-y}M_{y}]O_{26.0+z}. This composite oxide also has an apatite-type structure. In the formula, A represents one or two or more elements selected from the group consisting of La, Ce, Pr, Nd, Pm, Sm, Eu, Gd, Tb, Dy, Ho, Er, Yb, Lu, Be, Mg, Ca, Sr, and Ba; T represents an element including Si or Ge or both; and M represents one or two or more elements selected from the group consisting of Mg, Al, Sc, Ti, V, Cr, Mn, Fe, Co, Ni, Ga, Y, Zr, Ta, Nb, B, Ge, Zn, Sn, W, and Mo. From the viewpoint of improving the c-axis orientation, it is preferable that M is one or two or more elements selected from the group consisting of B, Ge, and Zn.

In the formula, x is preferably -1.33 or greater and 1.50 or less, more preferably 0.00 or greater and 0.70 or less, and even more preferably 0.45 or greater and 0.65 or less, from the viewpoint of improving the degree of orientation and the oxide ion conductivity. In the formula, y is preferably 0.00 or greater and 3.00 or less, more preferably 0.40 or greater and 2.00 or less, and even more preferably 0.40 or greater and 1.00 or less, from the viewpoint of filling the position of the element T in the apatite-type crystal lattice. In the formula, z is preferably -5.00 or greater and 5.20 or less, more preferably -2.00 or greater and 1.50 or less, and even more preferably -1.00 or greater and 1.00 or less, from the viewpoint of keeping the electroneutrality in the apatite-type crystal lattice.

In the formula above, the ratio of the number of moles of A to the number of moles of T, or in other words, (9.33+x)/(6.00-y) in the formula above is preferably 1.33 or greater and 3.61 or less, more preferably 1.40 or greater and 3.00 or less, and even more preferably 1.50 or greater and 2.00 or less, from the viewpoint of keeping the spatial occupation ratio in the apatite-type crystal lattice.

Out of composite oxides represented by the formula above, it is preferable to use a composite oxide in which A is lanthanum, that is, a composite oxide represented by La_{9.33+x}[T_{6.00-y}M_{y}]O_{26.0+z}, from the viewpoint of improving the oxide ion conductivity even more. Specific examples of the composite oxide represented by La_{9.33+x}[T_{6.00-y}M_{y}]O_{26.0+z} include La_{9.33+x}(Si_{4.70}B_{1.30})O_{26.0+z}, La_{9.33+x}(Si_{4.70}Ge_{1.30})O_{26.0+z}, La_{9.33+x}(Si_{4.70}Zn_{1.30})O_{26.0+z}, La_{9.33+x}(Si_{4.70}W_{1.30})O_{26.0+z}, La_{9.33+x}(Si_{4.70}Sn_{1.30})O_{26.0+x}, La_{9.33+x}(Ge_{4.70}B_{1.30})O_{26.0+z}, and the like. A composite oxide represented by the formula above can be produced in accordance with the method disclosed in WO 2016/111110, for example.

From the viewpoint of effectively reducing the electric resistance of the solid electrolyte assembly 10, the thickness of the solid electrolyte layer 11 is preferably 10 nm or greater and 1000 µm or less, more preferably 50 nm or greater and 700 µm or less, and even more preferably 100 nm or greater and 500 µm or less. The thickness of the solid electrolyte layer 11 can be measured using, for example, a stylus profilometer or an electron microscope.

The first electrode layer 12 disposed on one surface of the solid electrolyte layer 11 is made of an oxide having oxide ion conductivity. This oxide is represented by ABO_{3-δ} and has a perovskite structure, where A represents an alkaline-earth metal element, B represents a transition metal element, and δ represents a fraction that occurs depending on the valences and amounts of A, B, and O. Various oxides that are represented by ABO_{3-δ} and have a perovskite structure are known, and it is known that such oxides have various crystal structures such as, for example, cubic, tetragonal, rhombohedral, and orthorhombic crystal structures. Out of these crystal structures, an ABO_{3-δ} type oxide having a cubic perovskite structure is used as the first electrode layer 12 in the present invention. When a solid electrolyte assembly 10 is formed by directly joining the first electrode layer 12 made of such an oxide to the solid electrolyte layer 11 made of the above-described material, the oxide ion conductivity of the assembly 10 as a whole can be improved. In contrast to this, in conventional devices having a solid electrolyte layer and an electrode layer, such as the device disclosed in Patent Literature 3 for example, even though an oxide having a perovskite structure is used as the material of the electrode layer as well, the oxide has a rhombohedral crystal system.

As a result of the research conducted by the inventors of the present invention, it was found that, from the viewpoint of improving the oxide ion conductivity of the solid electrolyte assembly 10 as a whole, it is advantageous that the oxide represented by ABO_{3-δ} of the first electrode layer 12 contains lanthanum at a part of A site. Hereinafter, this oxide may also be referred to as the "oxide a". The amount of lanthanum contained in the oxide a, in terms of the atom ratio of lanthanum to all the elements occupied at the A site, is preferably 0.01 or greater and 0.80 or less, more preferably 0.05 or greater and 0.80 or less, even more preferably 0.10 or greater and 0.80 or less, yet even more preferably 0.10 or greater and 0.70 or less, and most preferably 0.15 or greater and 0.60 or less. The reason why the use of the oxide a improves the oxide ion conductivity is not clear, but the inventors of the present invention consider that, as a result of the oxide a containing lanthanum at a part of the A site, paths along which oxide ions easily migrate may be formed in the oxide a. The atom ratio can be measured using energy-dispersive X-ray spectroscopy (EDS), an electron probe microanalyzer (EPMA), or ICP emission spectroscopic analysis.

Whether or not lanthanum occupies a part of the A site in the oxide represented by ABO_{3-δ} can be confirmed using X-ray diffractometry. Also, the proportion of lanthanum in all the elements occupying the A site can be measured using energy-dispersive X-ray spectroscopy (EDS), an electron probe microanalyzer (EPMA), or ICP emission spectroscopic analysis.

Similarly, from the viewpoint of improving the oxide ion conductivity of the solid electrolyte assembly 10 as a whole, it is also advantageous that, in the oxide represented by ABO_{3-δ} of the first electrode layer 12, a part of B site is occupied by iron, or iron and at least one transition metal element other than iron. Hereinafter, this oxide may also be referred to as the "oxide b". The amount of iron contained in the oxide b, in terms of the atom ratio of iron to all the elements occupying the B site, is preferably 0. 01 or greater and 1.0 or less, more preferably 0.1 or greater and 1.0 or less, even more preferably 0.2 or greater and 1.0 or less, and particularly preferably 0.4 or greater and 1.0 or less. The reason why the use of the oxide b improves the oxide ion conductivity is not clear, but the inventors of the present invention consider that, as a result of iron being contained at B site in the oxide represented by ABO_{3-δ}, an oxidation-reduction reaction occurs, and this may make it easy for oxide ions to migrate. The atom ratio can be measured using energy-dispersive X-ray spectroscopy (EDS), an electron probe microanalyzer (EPMA), or ICP emission spectroscopic analysis.

Whether or not iron occupies B site in the oxide represented by ABO_{3-δ} of the first electrode layer 12 can be confirmed using X-ray diffractometry. Also, the proportion of iron in all the elements occupying the B site can be measured using energy-dispersive X-ray spectroscopy (EDS), an electron probe microanalyzer (EPMA), or ICP emission spectroscopic analysis.

It is preferable that the alkaline-earth metal element that occupies the A site in the oxide represented by ABO_{3-δ} of the first electrode layer 12 is one or more elements selected from the group consisting of barium and strontium, from the viewpoint of improving the oxide ion conductivity of the solid electrolyte assembly 10 as a whole. That is to say, it is preferable that, at the A site in the oxide a, lanthanum is contained, and furthermore one or more elements selected from the group consisting of barium and strontium occupies at least a part of the A site.

On the other hand, it is preferable that at least a portion of the element that occupies the B site in the oxide represented by ABO_{3-δ} of the first electrode layer 12 includes a transition metal element, or particularly preferably, an element belonging to the fourth and fifth periods of the periodic table. In particular, it is preferable that at least a portion of the element that occupies the B site includes at least one element selected from the group consisting of iron, cobalt, nickel, copper, titanium, zirconium, and niobium. From the viewpoint of improving the oxide ion conductivity of the solid electrolyte assembly 10 as a whole, it is preferable that at least a portion of the transition metal element occupying the B site is constituted by iron. From the same viewpoint, it is preferable that either iron or copper is occupied at at least a part of the B site.

In the case where iron further occupies at B site in the oxide a, the atom ratio of iron to all the elements occupied at the B site is preferably 0.10 or greater and 1.00 or less, more preferably 0.5 or greater and 0.90 or less, and even more preferably 0.60 or greater and 0.80 or less. Moreover, in the case where iron and copper occupy B site in the oxide a, the atom ratio of the sum of iron and copper to all the elements occupying the B site is preferably 0.20 or greater and 1.00 or less, more preferably 0.50 or greater and 1.00 or less, and even more preferably 0.60 or greater and 1.00 or less. In this case, with respect to the atom ratio of iron to copper, the value of the ratio Fe/Cu is preferably 1.00 or greater and 10.0 or less, more preferably 2.00 or greater and 9.50 or less, and even more preferably 5.00 or greater and 9.00 or less. The atom ratios above and the value of the ratio Fe/Cu can be measured using energy-dispersive X-ray spectroscopy (EDS), an electron probe microanalyzer (EPMA), or ICP emission spectroscopic analysis.

In the case where the above-described oxide b is used as the material constituting the first electrode layer 12, it is preferable that at least a portion of the element that occupies the B site is constituted by iron and copper, from the viewpoint of improving the oxide ion conductivity of the solid electrolyte assembly 10 as a whole, and it is more preferable that only iron and copper occupy the B site of the oxide b. The amount of copper contained in the oxide b, in terms of the atom ratio of copper to all the elements occupying the B site, is preferably 0.01 or greater and 1.0 or less, more preferably 0.05 or greater and 0.80 or less, and even more preferably 0.10 or greater and 0.65 or less. The atom ratio can be measured using energy-dispersive X-ray spectroscopy (EDS), an electron probe microanalyzer (EPMA), or ICP emission spectroscopic analysis.

On the other hand, it is preferable that the element that occupies the A site of the oxide b is at least either barium or strontium in particular, out of the alkaline-earth metal elements, from the viewpoint of improving the oxide ion conductivity of the solid electrolyte assembly 10 as a whole. From the same viewpoint, lanthanum may also be contained at a part of the A site in the oxide b. In particular, it is preferable that lanthanum is contained at the A site in the oxide b, and furthermore either barium or strontium occupies the A site in the oxide b.

In the case where lanthanum further occupies a part of the A site in the oxide b, the atom ratio of lanthanum to all the elements occupying the A site is preferably 0.01 or greater and 0.80 or less, more preferably 0.05 or greater and 0.80 or less, even more preferably 0.10 or greater and 0.70 or less, and most preferably 0.15 or greater and 0.60 or less. This atom ratio can be measured using energy-dispersive X-ray spectroscopy (EDS), an electron probe microanalyzer (EPMA), or ICP emission spectroscopic analysis.

Oxides that are especially preferable as the oxide a and the oxide b are those described in (i) to (iv) below:
(i) an oxide in which lanthanum and strontium occupy the A site, and iron, cobalt, and nickel occupy the B site;
(ii) an oxide in which lanthanum and barium occupy the A site, and iron occupies the B site;
(iii) an oxide in which barium occupies the A site, and iron and copper occupy the B site; and
(iv) an oxide in which lanthanum and barium occupy the A site, and iron and copper occupy the B site.

An oxide, including the oxide a and the oxide b, that constitutes the first electrode layer 12 can be obtained through a breakdown process in which particles are micronized using mechanical energy or a build-up process in which growth of aggregates of atoms or molecules is controlled via chemical reactions. From the viewpoint of reducing the electric resistance, it is preferable to use the build-up process. With the build-up process, it is easy to obtain fine particles, and also the contact area between particles can be increased. Therefore, it is considered that the build-up process can achieve the above-described effects. Specifically, for example, the oxide can be obtained using the following method. That is to say, acetates or nitrates of metals that are mixed in stoichiometric proportions in accordance with the composition of an oxide having a perovskite structure to be obtained, as well as DL-malic acid are dissolved in ion-exchanged water, and aqueous ammonia is added under stirring to adjust the pH to 2 to 4. After that, the solution is evaporated at about 350 °C, and the resulting powder is pulverized in a mortar. The thus obtained powder is calcined at a temperature of 900 °C in the air for 5 hours, and pulverized again. Note that the method for obtaining the oxide is not limited to this method. Moreover, it is also possible to use a mixture of the oxide and a metal belonging to the platinum group, or the oxide on which a metal belonging to the platinum group is supported.

From the above-described viewpoint, the average particle size of the oxide is preferably 1000 nm or less, more preferably 600 nm or less, even more preferably 300 nm or less, and yet even more preferably 200 nm or less. Also, the average particle size of the oxide is preferably 1 nm or greater, more preferably 2 nm or greater, and even more preferably 3 nm or greater. The average particle size can be calculated using an image of particles obtained by observation under a scanning electron microscope, as well as a known piece of image analysis software. For example, 10 randomly chosen particles are observed at a magnification of 1,000 to 100,000 to thereby determine the outlines of the particles, and after processing such as contrast enhancement and drawing lines along the outlines is performed as necessary, image analysis is performed, so that the average particle size can be calculated.

Moreover, regarding the contact area between particles of the oxide, the value of the ratio C/D is preferably 0.2 or greater, more preferably 0.4 or greater, and even more preferably 0.6 or greater, where D is the length of the outline of a particle, and C is the length of a portion of the outline that overlaps an adjacent particle. As is the case with the average particle size, the values of C and D can also be calculated using a known piece of image analysis software. To calculate the value of the ratio C/D, first, 10 randomly chosen particles are observed to thereby determine the outlines of the particles, then, portions of the outlines that overlap adjacent particles are visually determined and drawn, and after that, arithmetic mean values of C and D are obtained through image analysis and used to calculate the value of the ratio C/D. The values of C and D of the oxide are the values with respect to not only the oxide that is present in the electrode layer but also the oxide that serves as the raw material powder for forming the electrode layer. As will be described later in Examples, measurement of the values of C and D is performed on a fired product of the oxide.

Furthermore, from the viewpoint of effectively reducing the electric resistance, the value of the ratio P1/P2 of the primary particle size P1 (nm) to the secondary particle size P2 (nm) of the oxide is preferably 0.02 or greater, more preferably 0.03 or greater, and even more preferably 0.04 or greater. Also, the value of the ratio P1/P2 is preferably 0.3 or less, more preferably 0.2 or less, and even more preferably 0.17 or less. Setting the value of the ratio P1/P2 to be within the above-described range enables that oxygen propagation paths are formed while securing the contact area between particles in the oxide, and thus, electric resistance can be reduced even further. The primary particle size P1 and the secondary particle size P2 of the present invention can be obtained through small-angle X-ray scattering (SAXS) measurement. The value of the secondary particle size itself of the oxide is preferably 1 nm or greater, more preferably 2 nm or greater, and even more preferably 3 nm or greater. Also, the secondary particle size is preferably 500 nm or less, more preferably 300 nm or less, and even more preferably 200 nm or less. A "primary particle" refers to a particle that is generated by the growth of a single crystal nucleus, and a "secondary particle" refers to a particle that is present as an aggregate of a plurality of primary particles into which the primary particles are aggregated or sintered, for example. The primary particle size P1 and the secondary particle size P2 of the oxide are values with respect to not only the oxide that is present in the electrode layer but also the oxide that serves as the raw material powder for forming the electrode layer. As will be described later in Examples, measurement of the primary particle size P1 and the secondary particle size P2 is performed on a fired product of the oxide.

As a result of the research conducted by the inventors of the present invention, it was found that, when the first electrode layer 12 has a predetermined thickness, the oxide ion conductivity of the solid electrolyte assembly 10 as a whole can be improved even more. More specifically, the thickness of the first electrode layer 12 that is joined to the solid electrolyte layer 11 is preferably 100 nm or greater, more preferably 500 nm or greater, and even more preferably 1000 nm or greater and 30000 nm or less in the stacking direction. The thickness of the first electrode layer 12 can be measured using a stylus profilometer or an electron microscope.

The second electrode layer 13 that is formed on the opposite side of the solid electrolyte layer 11 from the first electrode layer 12 may be composed of, for example, the same oxide as the oxide that forms the first electrode layer 12, or a different oxide. Alternatively, the second electrode layer 13 may be a metal electrode. In the case where the second electrode layer 13 is a metal electrode, it is preferable that the metal electrode contains an element belonging to the platinum group, because such elements have advantages of, for example, being easier to form compared with an oxide and having high catalytic activity. Examples of the element belonging to the platinum group include platinum, ruthenium, rhodium, palladium, osmium, and iridium. These elements may be used alone or in a combination of two or more. Moreover, a cermet containing an element belonging to the platinum group may also be used as the metal electrode. The thickness of the second electrode layer 13 can be set within the above-described range of the thickness of the first electrode layer 12.

The solid electrolyte assembly 10 and the device 20 of the embodiment shown in Fig. 1 can be favorably produced using, for example, a method described below. First, a solid electrolyte layer 11 is produced using a known method. To produce the solid electrolyte layer 11, for example, the method disclosed in JP 2013-51101A or WO 2016/111110 described above may be used.

Then, a first electrode layer 12 is formed on one of the two surfaces of the solid electrolyte layer 11. To form the first electrode layer 12, for example, a method may be employed in which a slurry containing a powder of the above-described oxide that is represented by ABO_{3-δ} and has a cubic perovskite structure is applied to one surface of the solid electrolyte layer 11 to form a coating film, and the coating films is then fired . The slurry is obtained by, for example, dissolving ethyl cellulose in α-terpineol to form a binder, adding the powder of the oxide to the binder, and adjusting the concentration. The concentration of the oxide powder in the slurry may be, for example, 10 mass% or greater and 40 mass% or less. The conditions under which the coating film formed by applying this slurry is fired are as follows. Regarding the atmosphere, for example, an oxygen-containing atmosphere, such as an atmosphere of air, or an inert atmosphere, such as a nitrogen gas atmosphere or an argon gas atmosphere, may be used. The firing temperature is preferably 700 °C or greater and 1200 °C or less, more preferably 800 °C or greater and 1100 °C or less, and even more preferably 900 °C or greater and 1000 °C or less. The firing time is preferably 1 hour or longer and 10 hours or less, more preferably 3 hours or longer and 8 hours or less, and even more preferably 5 hours or longer and 7 hours or less.

After, or simultaneously with, the formation of the first electrode layer 12, a second electrode layer 13 can be formed on a surface of the solid electrolyte layer 11 that is opposite to the surface on which the first electrode layer 12 is formed. In the case where the second electrode layer 13 is an oxide of the same type as the oxide that forms the first electrode layer 12, the second electrode layer 13 can be formed in a similar manner to that of the first electrode layer 12. In the case where the second electrode layer 13 is a metal electrode, a paste containing particles of a metal belonging to, for example, the platinum group may be used to form the metal electrode. The paste is applied to the surface of the solid electrolyte layer 11 to form a coating film, the coating film is then fired, and thus, a metal electrode constituted by a porous body is formed. The firing conditions may be set as follows: temperature: 600 °C or greater; and time: 30 minutes or longer and 120 minutes or less. The atmosphere may be an oxygen-containing atmosphere, such as an atmosphere of air.

The solid electrolyte assembly 10 and the device 20 are obtained in the above-described manner. The thus obtained device 20 can be favorably used as, for example, an oxygen permeable element, a gas sensor, a solid electrolyte fuel cell, or the like by making use of its high oxide ion conductivity. No matter what purpose the device 20 is used for, it is advantageous to use the first electrode layer 12 as a cathode, that is, the electrode where an oxygen gas reduction reaction occurs. For example, in the case where the device 20 is used as an oxygen permeable element, the second electrode layer 13 is connected to an anode of a DC power supply, the first electrode layer 12 is connected to a cathode of the DC power supply, and a predetermined DC voltage is applied between the first electrode layer 12 and the second electrode layer 13. As a result, on the first electrode layer 12 side, oxygen receives electrons, and oxide ions are generated. The generated oxide ions migrate through the solid electrolyte layer 11 to reach the second electrode layer 13. The oxide ions that have reached the second electrode layer 13 release electrons and form oxygen gas. Through such reactions, the solid electrolyte layer 11 is capable of transmitting oxygen gas contained in an atmosphere on the first electrode layer 12 side toward the second electrode layer 13 side through the solid electrolyte layer 11. Note that, in addition, a current collecting layer made of a conductive material such as platinum may also be formed on at least one of the surface of the first electrode layer 12 and the surface of the second electrode layer 13, if necessary.

From the viewpoint of increasing the amount of oxygen gas transmission, it is preferable that the voltage to be applied is set to 0.1 V or greater and 4.0 V or less. When applying a voltage between the electrodes, it is preferable that the solid electrolyte layer 11 has sufficiently high oxide ion conductivity. For example, it is preferable that the oxide ion conductivity is 1.0 × 10⁻³ S/cm or greater in terms of conductivity. For this purpose, it is preferable to keep the solid electrolyte layer 11, or the entire device 20, at a predetermined temperature. This temperature varies depending on the material of the solid electrolyte layer 11, but in general, it is preferable that this temperature is set within a range of 300 °C or greater and 700 °C or less. When the device 20 is used under this condition, oxygen gas contained in an atmosphere on the first electrode layer 12 side can be transmitted to the second electrode layer 13 side through the solid electrolyte layer 11.

In the case where the device 20 is also used as a limiting current oxygen sensor, a current is generated due to oxide ions generated on the first electrode layer 12 side migrating to the second electrode layer 13 side via the solid electrolyte layer 11. The current value depends on the oxygen gas concentration on the first electrode layer 12 side, and therefore, the oxygen gas concentration on the first electrode layer 12 side can be measured by measuring the current value.

### Examples

Hereinafter, the present invention will be described in greater detail by means of examples. However, the scope of the present invention is not limited to the examples below. In the following description, "%" means "mass%" unless otherwise specified.

### Example 1

In the present example, a solid electrolyte assembly 10 and a device 20 shown in Fig. 1 were produced by performing steps (1) to (3) below.

### (1) Production of Solid Electrolyte Layer 11

La₂O₃ powder and SiO₂ powder were blended in a mole ratio of 1:1. Then, ethanol was added thereto, followed by mixing using a ball mill. The mixture was dried, pulverized in a mortar, and calcined at 1650 °C in an atmosphere of air for 3 hours using a platinum crucible. To this calcined product, ethanol was added, and pulverization was performed using a planetary ball mill, to obtain a calcined powder. This calcined powder was placed into a mold having a diameter of 20 mm and uniaxially molded by applying pressure from one direction. Furthermore, cold isostatic pressing (CIP) was performed at 600 MPa for 1 minute to thereby form a pellet. This pellet-shaped molded body was heated at 1600 °C in the air for 3 hours to obtain a pellet-shaped sintered body. This sintered body was subjected to an X-ray diffraction measurement and a chemical analysis, and was confirmed to have the structure of La₂SiO₅.

Then, 800 mg of the obtained pellet and 140 mg of a B₂O₃ powder were placed into a saggar with a lid, and heated, with use of an electric furnace, at 1550 °C (temperature of the atmosphere within the furnace) in the air for 50 hours, to thereby generate B₂O₃ vapor in the saggar and react the B₂O₃ vapor with the pellet, and thus, a solid electrolyte layer 11 to be produced was obtained. This solid electrolyte layer 11 was a compound represented by La_{9.33+x}[Si_{6.00-y}B_{y}]O_{26.0+z}, where x = 0.50, y = 1.17, and z = 0.16 and the mole ratio between La and Si was 2.04 (hereinafter this compound will be abbreviated as "LSBO"). The oxide ion conductivity at 600 °C was 6.3 × 10⁻² S/cm. The thickness of the solid electrolyte layer 11 was 350 µm.

### (2) Production of First Electrode Layer 12 and Second Electrode Layer 13

A powder of La_{0.6}Sr_{0.4}Co_{0.78}Fe_{0.2}Ni_{0.02}O_{3-δ} (hereinafter also referred to as "LSCFN") having a cubic perovskite structure was used as an oxide constituting a first electrode layer 12 and a second electrode layer 13. This oxide was obtained in the following manner. First, lanthanum nitrate, strontium nitrate, cobalt nitrate, iron nitrate, and nickel nitrate, as well as DL-malic acid were dissolved in ion-exchanged water, and aqueous ammonia was added thereto under stirring to adjust the pH to about 5.0 to 6.0. Then, the solution was evaporated at about 350 °C, to obtain a powder (build-up process). The obtained powder was pulverized in a mortar. The thus obtained powder was calcined at 900 °C in the air for 5 hours, and thus, the LSCFN powder to be obtained was produced. Based on X-ray diffraction peaks, it was confirmed that LSCFN was a single phase of a perovskite structure represented by a cubic crystal ABO_{3-δ}.
The LSCFN powder was dispersed in a binder obtained by dissolving ethyl cellulose in α-terpineol, to thereby prepare a 25 mass% paste. This paste was applied to the surfaces of the solid electrolyte layer 11 to form coating films. The coating films were fired at 900 °C in an atmosphere of air for 5 hours, to obtain a first electrode layer 12 and a second electrode layer 13 made of a porous body. Both the first electrode layer 12 and the second electrode layer 13 had a thickness of 20 µm.

Various evaluations were performed using a fired product obtained by firing the LSCFN powder. The average particle size of LSCFN calculated using a piece of image analysis software ImageJ was 188 nm, and the value of the ratio C/D was 0.78, where D was the length of the outline of a particle, and C was the length of a portion of the outline that overlapped an adjacent particle. The primary particle size P1 and the secondary particle size P2 were obtained by performing an analysis on data from small-angle X-ray scattering measurement under the conditions described below, using a piece of software "NANO-Solver" available from Rigaku Corporation. Slit correction was performed; background processing was performed using the results of measurement that was performed without a specimen; and the following were assumed: the scatterer model was a sphere, and variations in size followed the gamma function. In refinements, the analysis area was set to 0.14 to 1.4 deg., and the background was also refined. Moreover, assuming that the scatterer model had two particle size distributions, the primary particle size P1 and the secondary particle size P2 were calculated. Values obtained from a scanning electron microscope image were used as initial values, and the refinement procedure was as follows: first, refinement was performed within 0.14 to 0.5 deg., then, refinement was performed within 0.14 to 1.0 deg., and finally, refinement was performed within 0.14 to 1.4 deg. In the refinements of the respective angular ranges, each refinement was performed until a sufficiently converged state was achieved in which variations in analysis values were small. Fig. 2 shows a scanning electron microscope image of the LSCFN powder (after fired) used in the first electrode layer 12 and the second electrode layer 13.

The conditions under which the LSCFN powder was fired were as follows. The calcining atmosphere was air. The firing temperature was 900 °C. The firing time was 5 hours. The rate of temperature increase was 200 °C/min. The rate of temperature decrease was 300 °C/min.

Small-Angle X-Ray Scattering Measurement Conditions
- Device name: "SmartLab" available from Rigaku Corporation
   Scan axis: 2θ
- Scan range: 0 to 4 deg.
- Scan speed: 0.1 deg./min.
- Step width: 0.02 deg.
- Optical system: specifications for small-angle scattering
   Specimen position: The powder specimen was held using Kapton tape, and measured in transmission.

### (3) Production of Current Collecting Layers

A platinum paste was applied to the surfaces of the first electrode layer 12 and the second electrode layer 13 to form coating films. These coating films were fired at 700 °C in the air for 1 hour, to obtain current collecting layers. In this manner, a device 20 including a solid electrolyte assembly 10 was produced.

### Example 2

In Example 1, instead of LSCFN, Ba_{0.95}La_{0.05}FeO_{3-δ} (hereinafter also referred to as "BLF") having a cubic perovskite structure was used. Based on X-ray diffraction peaks, it was found that this oxide was a single phase of the perovskite structure represented by a cubic crystal ABO_{3-δ}. Otherwise, a similar procedure to that of Example 1 was performed, and a device 20 including a solid electrolyte assembly 10 was obtained.

### Example 3

In Example 1, instead of LSCFN, BaFe_{0.5}Cu_{0.5}O_{3-δ} (hereinafter also referred to as "BFC") having a cubic perovskite structure was used. Based on X-ray diffraction peaks, it was confirmed that this oxide was a single phase of the perovskite structure represented by a cubic crystal ABO_{3-δ}. Otherwise, a similar procedure to that of Example 1 was performed, and a device 20 including a solid electrolyte assembly 10 was obtained.

### Example 4

In Example 1, instead of LSCFN, Ba_{0.85}La_{0.15}Fe_{0.9}Cu_{0.1}O_{3-δ} (hereinafter also referred to as "BLFC0.1") having a cubic perovskite structure was used. Based on X-ray diffraction peaks, it was confirmed that this oxide was a single phase of the perovskite structure represented by a cubic crystal ABO_{3-δ}. Otherwise, a similar procedure to that of Example 1 was performed, and a device 20 including a solid electrolyte assembly 10 was obtained.

### Example 5

In Example 1, instead of LSCFN, Ba_{0.8}La_{0.2}Fe_{0.85}Cu_{0.15}O_{3-δ} (hereinafter also referred to as "BLFC0.15") having a cubic perovskite structure was used. Based on X-ray diffraction peaks, it was confirmed that this oxide was a single phase of the perovskite structure represented by a cubic crystal ABO_{3-δ}. Otherwise, a similar procedure to that of Example 1 was performed, and a device 20 including a solid electrolyte assembly 10 was obtained.

### Example 6

In Example 1, instead of LSCFN, Ba_{0.7}La_{0.3}Fe_{0.75}Cu_{0.25}O_{3-δ} (hereinafter also referred to as "BLFC0.25") having a cubic perovskite structure was used. Based on X-ray diffraction peaks, it was confirmed that this oxide was a single phase of the perovskite structure represented by a cubic crystal ABO_{3-δ}. Otherwise, a similar procedure to that of Example 1 was performed, and a device 20 including a solid electrolyte assembly 10 was obtained.

### Example 7

In Example 1, instead of LSCFN, Ba_{0.6}La_{0.4}Fe_{0.65}Cu_{0.35}O_{3-δ} (hereinafter also referred to as "BLFC0.35") having a cubic perovskite structure was used. Based on X-ray diffraction peaks, it was confirmed that this oxide was a single phase of the perovskite structure represented by a cubic crystal ABO_{3-δ}. Otherwise, a similar procedure to that of Example 1 was performed, and a device 20 including a solid electrolyte assembly 10 was obtained.

### Example 8

In Example 1, instead of LSCFN, Ba_{0.5}La_{0.5}Fe_{0.55}Cu_{0.45}O_{3-δ} (hereinafter also referred to as "BLFC0.45") having a cubic perovskite structure was used. Based on X-ray diffraction peaks, it was confirmed that this oxide was a single phase of the perovskite structure represented by a cubic crystal ABO_{3-δ}. Otherwise, a similar procedure to that of Example 1 was performed, and a device 20 including a solid electrolyte assembly 10 was obtained.

### Example 9

In Example 1, instead of LSCFN, Ba_{0.4}La_{0.6}Fe_{0.45}Cu_{0.55}O_{3-δ} (hereinafter also referred to as "BLFC0.55") having a cubic perovskite structure was used. Based on X-ray diffraction peaks, it was confirmed that this oxide was a single phase of the perovskite structure represented by a cubic crystal ABO_{3-δ}. Otherwise, a similar procedure to that of Example 1 was performed, and a device 20 including a solid electrolyte assembly 10 was obtained.

### Example 10

In Example 1, instead of LSCFN, Ba_{0.3}La_{0.7}Fe_{0.35}Cu_{0.65}O3_{-δ} (hereinafter also referred to as "BLFC0.65") having a cubic perovskite structure was used. Based on X-ray diffraction peaks, it was confirmed that this oxide was a single phase of the perovskite structure represented by a cubic crystal ABO_{3-δ}. Otherwise, a similar procedure to that of Example 1 was performed, and a device 20 including a solid electrolyte assembly 10 was obtained.

### Comparative Example 1

In Example 1, a platinum electrode was directly formed on the solid electrolyte layer without forming LSCFN. Otherwise, a similar procedure to that of Example 1 was performed, and a device 20 including a solid electrolyte assembly 10 was obtained.

### Comparative Example 2

In Example 1, instead of LSCFN containing Fe, La_{0.5}Sr_{0.4}Cu_{0.9}Ni_{0.1}O_{3-δ} (hereinafter also referred to as "LSCN") having a rhombohedral perovskite structure was used. Otherwise, a similar procedure to that of Example 1 was performed, and a device 20 including a solid electrolyte assembly 10 was obtained.

### Comparative Example 3

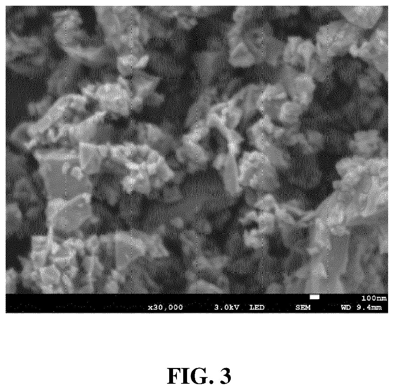

In Example 1, instead of LSCFN containing Ni, La_{0.6}Sr_{0.4}Co_{0.2}Fe_{0.8}O_{3-δ} (hereinafter also referred to as "LSCF") that was produced using a solid phase reaction method and had a rhombohedral perovskite structure was used. A lanthanum oxide powder, a strontium carbonate powder, a cobalt oxide powder, and an iron oxide powder were used as starting materials. These powders were weighed and mixed in stoichiometric proportions, and the mixture was calcined at 1200 °C for 3 hours. After the calcing, the calcined product was pulverized for 1 hour using a ball mill, to obtain LSCF (breakdown process). Fig. 3 shows a scanning electron microscope image of the LSCF powder used in the first electrode layer 12 and the second electrode layer 13.

### Evaluation

The current densities of the devices obtained in the examples and the comparative examples were measured using the following method. Table 1 below shows the results.

### Measurement of Current Density

Measurement was performed at 600 °C. A direct current of 0.5 V was applied between the current collecting layers of the device in the air, and the current density was measured.

**Table 1**

| | Solid electrolyte layer | Electrode layer | | Average particle size (nm) | Length (D) of outline/Length (C) of overlapping portion | Primary particle size P1 (nm) | Secondary particle size P2 (nm) | Particle size ratio | Current density (mA/cm²) |
|---|---|---|---|---|---|---|---|---|---|
| | | Type | Crystal structure | | | | | P1/P2 | DC 0.5 V 600 °C |
| Ex. 1 | LSBO | LSCFN | Cubic | 188 | 0.78 | 8.6 | 90.5 | 0.095 | 36.5 |
| Ex. 2 | LSBO | BLF | Cubic | - | - | 7.2 | 91.7 | 0.078 | 41.0 |
| Ex. 3 | LSBO | BFC | Cubic | - | - | 7.7 | 187.6 | 0.041 | 14.5 |
| Ex. 4 | LSBO | BLFC0.1 | Cubic | - | - | 9.9 | 132.8 | 0.075 | 64.8 |
| Ex. 5 | LSBO | BLFC0.15 | Cubic | - | - | - | - | - | 46.5 |
| Ex. 6 | LSBO | BLFC0.25 | Cubic | - | - | - | - | - | 54.3 |
| Ex. 7 | LSBO | BLFC0.35 | Cubic | - | - | 12.0 | 93.1 | 0.129 | 62.8 |
| Ex. 8 | LSBO | BLFC0.45 | Cubic | - | - | - | - | - | 99.3 |
| Ex. 9 | LSBO | BLFC0.55 | Cubic | - | - | - | - | - | 46.5 |
| Ex. 10 | LSBO | BLFC0.65 | Cubic | - | - | 10.6 | 59.7 | 0.177 | 21.3 |
| Com. Ex. 1 | LSBO | Pt | - | - | - | - | - | - | 3.7 |
| Com. Ex. 2 | LSBO | LSCN | Rhombohedral | - | - | - | - | - | 4.1 |
| Com. Ex. 3 | LSBO | LSCF | Rhombohedral | - | - | 9.3 | 594.0 | 0.016 | 6.5 |

As is clear from the results shown in Table 1, it can be seen that the solid electrolyte assemblies and the devices including the solid electrolyte assemblies obtained in the examples achieved higher current densities than the solid electrolyte assemblies and the devices including the solid electrolyte assemblies obtained in Comparative Examples 1 to 3.

### Industrial Applicability

According to the present invention, oxide ion conductivity of a device including a solid electrolyte is improved.

## Claims

1. A solid electrolyte assembly comprising a solid electrolyte and a first electrode,
the solid electrolyte having oxide ion conductivity and containing lanthanum,
the first electrode being made of an oxide that has a cubic perovskite structure and that is represented by ABO_{3-δ}, wherein A represents an alkaline-earth metal element, B represents a transition metal element, and δ represents a fraction that occurs depending on the valences and amounts of A, B, and O,
the solid electrolyte and the first electrode being joined to each other, and
the oxide containing lanthanum occupying a part of A site, and an atom ratio of lanthanum to all the elements occupying the A site being 0.01 or greater and 0.80 or less.

2. The solid electrolyte assembly according to claim 1, wherein, the A site of the oxide is occupied by lanthanum and one or more elements selected from the group consisting of barium and strontium.

3. The solid electrolyte assembly according to claim 1 or 2, wherein iron occupies at least a part of B site of the oxide.

4. The solid electrolyte assembly according to claim 3, wherein iron and copper occupy at least a part of the B site of the oxide.

5. A solid electrolyte assembly comprising a solid electrolyte and a first electrode,
the solid electrolyte having oxide ion conductivity and containing lanthanum,
the first electrode being made of an oxide that has a cubic perovskite structure and that is represented by ABO_{3-δ}, wherein A represents an alkaline-earth metal element, B represents only iron, or iron and at least one transition metal element other than iron, and δ represents a fraction that occurs depending on the valences and amounts of A, B, and O,
the solid electrolyte and the first electrode being joined to each other, and
the oxide optionally containing lanthanum occupying a part of A site, and an atom ratio of iron to all the elements occupying B site being 0.1 or greater and 1.0 or less.

6. The solid electrolyte assembly according to claim 5, wherein the oxide has an average particle size of 1000 nm or less, and a value of a ratio C/D is 0.2 or greater, wherein D is a length of an outline of a particle of the oxide, and C is a length of a portion of the outline that overlaps an adjacent particle.

7. The solid electrolyte assembly according to claim 5 or 6, wherein a value of a ratio P1/P2 is 0.02 or greater, wherein the ratio P1/P2 is a ratio of a primary particle size P1 (nm) to a secondary particle size P2 (nm), the particle sizes being obtained through small-angle X-ray scattering measurement of the oxide.

8. The solid electrolyte assembly according to any one of claims 5 or 7, wherein barium occupies at least a part of the A site of the oxide.

9. The solid electrolyte assembly according to any one of claims 5 to 8, wherein one of iron and copper occupy a part of the B site of the oxide.

10. The solid electrolyte assembly according to claim 9, wherein an atom ratio of copper to all the elements occupying the B site of the oxide is 0.01 or greater and 1.0 or less.

11. The solid electrolyte assembly according to any one of claims 1 to 10, wherein the solid electrolyte contains a composite oxide of lanthanum and silicon.

12. The solid electrolyte assembly according to any one of claims 1 to 11, wherein the solid electrolyte contains a composite oxide represented by the general formula A_{9.33+x}[T_{6.00-y}M_{y}]O_{26.0+z},
wherein A represents one or two or more elements selected from the group consisting of La, Ce, Pr, Nd, Pm, Sm, Eu, Gd, Tb, Dy, Ho, Er, Yb, Lu, Be, Mg, Ca, Sr, and Ba,
T represents an element including Si or Ge or both, and
M represents one or two or more elements selected from the group consisting of Mg, Al, Sc, Ti, V, Cr, Mn, Fe, Co, Ni, Ga, Y, Zr, Ta, Nb, B, Ge, Zn, Sn, W, and Mo,
x represents a number that is -1.33 or greater and 1.50 or less,
y represents a number that is 0.00 or greater and 3.00 or less,
z represents a number that is -5.00 or greater and 5.20 or less, and
a ratio of the number of moles of A to the number of moles of T is 1.33 or greater and 3.61 or less.

13. The solid electrolyte assembly according to any one of claims 1 to 12, further comprising a second electrode that is the same as, or different from, the first electrode, that is disposed on a surface of the solid electrolyte assembly that is opposite to a surface on which the electrode is disposed.
